# EUROPEAN PATENT SPECIFICATION

(11) **EP 2 205 022 B1**
(45) Date of publication and mention of the grant of the patent: **29.04.2015**
(21) Application number: 08291261.9
(22) Date of filing: 31.12.2008
(51) Int. Cl.: H04W 36/14

(54) **Method and apparatus for providing a handover indication in a cellular wireless network**
Verfahren und Vorrichtung zur Bereitstellung einer Weiterleitungsanzeige in einem drahtlosen zellulären Netzwerk
Procédé et appareil pour fournir une indication de transfert dans un réseau cellulaire sans fil

(43) Date of publication of application: 07.07.2010
(73) Proprietor: ALCATEL LUCENT, 92100 Boulogne-Billancourt (FR)
(72) Inventor: Godin, Philipe, 78220 Viroflay (FR); Mihailescu, Claudiu, 78000 Versailles (FR)
(74) Representative: Lück, Stephan

(56) References cited:
- WO-A-2008/157633
- ALCATEL-LUCENT: "Correction of SAE Bearer" 3GPP DRAFT; R3-082626, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081003, 30 September 2008 (2008-09-30), XP050323900 [retrieved on 2008-09-23]
- 3RD GENERATION PARTNERSHIP PROJECT; TECHNICAL SPECIFICATION GROUP RADIO ACCESS NETWORK: "Evolved Universal Terrestrial Radio Access Network (E-UTRAN); S1 Application Protocol (S1 AP) (Release 8)" 3GPP TS 36.413 V8.4.0 (2008-12), 16 December 2008 (2008-12-16), pages 1-39, XP002533365 650, ROUTE DES LUCIOLES ; F-06921 SOPHIA-ANTIPOLIS CEDEX ; FRANCE

## Description

### FIELD OF THE INVENTION

The present invention relates to a method and apparatus for providing a handover indication in a cellular wireless network.

### BACKGROUND

Currently, the 3rd Generation Partnership Project (3GPP) is developing Long Term Evolution (LTE), also referred to as E-UTRAN, as set out in the technical specification 3GPP TS 36.300 v 8.5.0 (2008- 05), to which the reader is referred for additional information, and related documents. 3GPP LTE aims to enhance the Universal Mobile Telecommunications System (UMTS) Radio Access Network standard, for example, by improving efficiency and services.

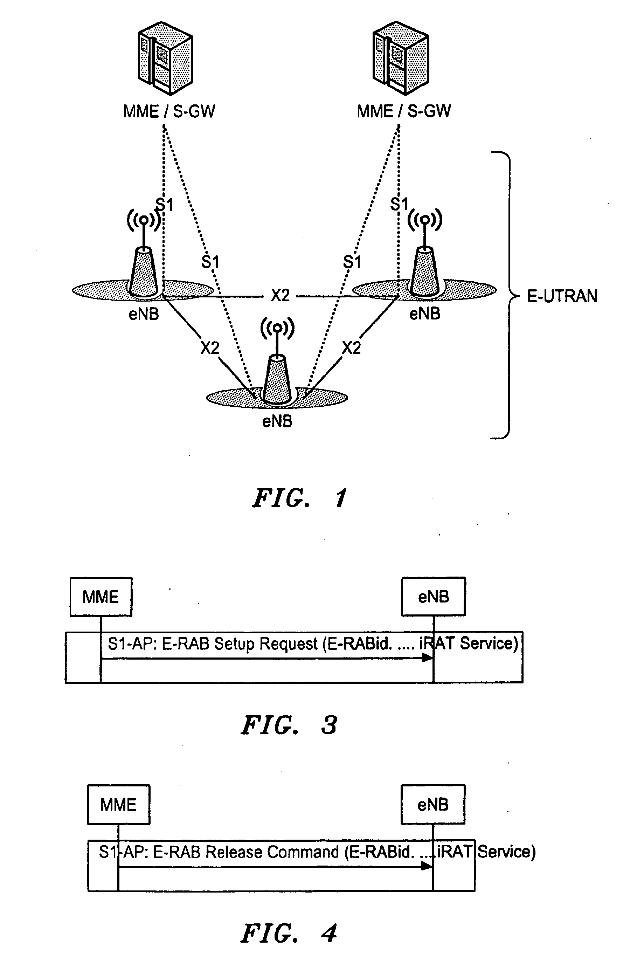

In LTE, user equipment (UE) communicates with a network node, E-UTRAN NodeB (eNB), with data being sent on radio bearers (RBs) over a radio link between them. The eNB interfaces with a Mobile Management Entity (MME) via an interface designated as S1. An LTE network typically includes a plurality of eNBs and MMEs as illustrated schematically in Figure 1. S1-flex mechanisms allow an cNB to be connected to a plurality of MMEs.

Where a UE is connected to an LTE network, it may be necessary to handover its connection to another network, for example, if signal conditions change or if the mobile device is moving, or for some other purpose. Thus, a UE might be transferred from a cell in an LTE network to a UMTS network having a neighbouring cell or cells or to a cell of a GSM network. In LTE, the inter-RAT (Radio Access Technology) handover towards GSM or UMTS is decided by the eNB. The handover then takes place for the whole UE. That is, all the bearers of the UE are relocated to the other RAT.

The decision in the eNB may be influenced by some external parameters, such as the Subscriber Profile ID for RAT/frequency priority. These parameters come from the Home Subscriber Server (HSS) and are subscription oriented, that is, oriented to the specific UE.

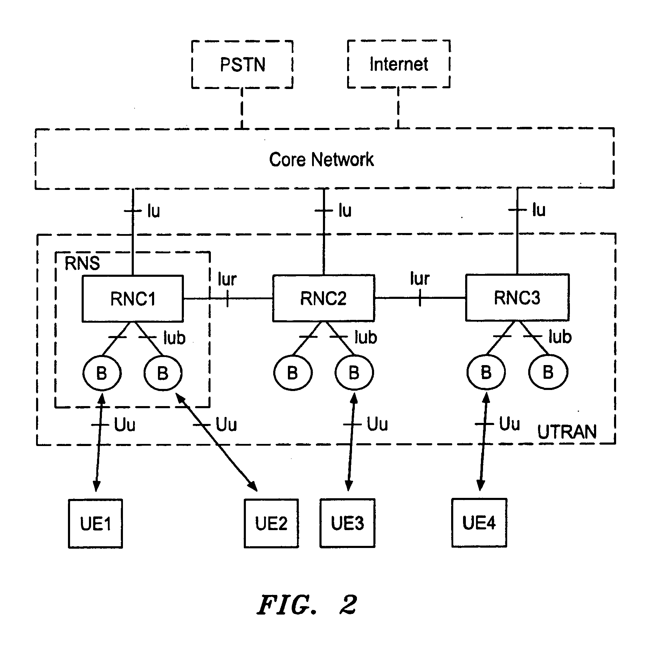

In a typical UMTS network, a plurality of Radio Access Controllers (RNCs) each control a plurality of base stations B as illustrated schematically in Figure 2. Mobile devices UE connect to the network via the base stations. In UMTS, the Core Network (CN) Node is the Serving GPRS Support Node (SGSN) for packet switched (PS) services and the Mobile Switching Centre (MSC) for circuit switched (CS) services. The Core Network Node is aware of the service behind each bearer request and indicates to the RNC a per-bearer inter-RAT restriction/preference indication together with the bearer request. The RNC then combines the per-bearer indications associated with the different bearers/services currently established and makes its decision for the whole UE as to whether to handover or not the call towards another RAT.

A paper by Alcatel-Lucent: "Correction of SAE Bearer" 3GPP Draft, R3-082626, 3GPP TSG RAN WG3 Meeting #61bis Prague, Sept 30th to October 3rd 2008, sets out some aspects of the S1 control plane in section 19 of the paper, for example, at 19.2.2.4.1 which discusses E-RAB Setup procedure.

### BRIEF SUMMARY

According to a first aspect of the invention, a method for providing a handover indication in a cellular wireless network, comprises: receiving at a core network node all on-going and/or requested bearer service requests for a user equipment (UE) at a certain time. The core network node uses information from the on-going and/or requested bearer service requests to determine what inter-RAT (Radio Access Technology) restrictions and/or preferences apply to said UE to provide an aggregate indication. It communicates the aggregate indication to an access node which is serving the UE.

The network may be an LTE network and the core network node may be a Mobile Management Entity (MME). In LTE there is only one domain per se, and all service requests go via one central Core Network node: the MME. The Core Network Node in LTE (the MME) therefore has knowledge of all bearers requested/ongoing for a UE at a given point of time. In contrast, for example, in UMTS, two domains are involved and therefore two separate CN nodes (SGSN and MSC). The MME has global knowledge of the UE and can thus make a decision itself for the whole UE about the necessary overall inter-RAT (iRAT) restrictions and/or preferences to apply to this UE. The MME can then provide a corresponding inter-RAT restrictions and/or preferences aggregate indication to the eNB that the eNB can apply faithfully, unless constrained in some way.

Since the combined or aggregated decision in the MME depends on all the services requested and/or ongoing in the UE at a given point of time, in one method in accordance with the invention, the MME sends this new aggregate indication to the eNB every time there is a configuration change requested, for example,. in every new bearer setup, or every bearer removal the new inter-RAT restriction/preferences aggregate indication applicable per UE is sent.

In one method, the core network node may include using subscription based information to make the determination..

According to a second aspect of the invention, a core network node comprises:
a receiver for receiving all on-going and/or requested bearer service requests for a user equipment (UE) at a certain time; a processor for using information from the on-going and/or requested bearer service requests to determine what inter-RAT (Radio Access Technology) restrictions and/or preferences apply to said UE to provide an aggregate indication; and a communicator for communicating the aggregate indication to an access node which is serving the UE.

According to a third aspect of the invention a cellular wireless network is arranged to implement a method in accordance with the invention.

According to a fourth aspect of the invention, a cellular wireless network comprising a core network node in accordance with the invention.

### BRIEF DESCRIPTION OF THE DRAWINGS

Some embodiments of the present invention will now be described by way of example only, and with reference to the accompanying drawings, in which:
Figure 1 schematically illustrates an LTE network;
Figure 2 schematically illustrates a UMTS network;
Figure 3 schematically illustrates part of an LTE network in accordance with the invention and a step in its operation; and
Figure 4 schematically illustrates the part shown in Figure 3 and another step in its operation.

### DETAILED DESCRIPTION OF THE DRAWINGS

With reference to Figure 3, part of an LTE network includes an MME and an cNB. The MME wants to establish a new bearer which will modify the set of services ongoing for the UE and may therefore modify the desired aggregate iRAT handover restriction/preferences corresponding to this new set of services. The MME therefore indicates the new iRAT restriction/preferences aggregate indication that will be applicable for the UE after the successful E-RAB Setup Request in this case.

With reference to Figure 4, the MME sends a new aggregate indication that will be applicable for the UE after the successful bearer removal.

By implementing a network in accordance with the invention, it enables control of the iRAT restrictions and/or preferences, dependent on services, for the whole UE, in a central location, this being the MME. Thus, the iRAT decision is not only UE subscription-based but is influenced by requested and/or ongoing services for the UE. The control is not left in the RAN node, which can belong to different vendors. Each eNB vendor could apply a different handover algorithm for the whole UE based on the combination of the restrictions and/or preferences indicated for each individual bearer. The policy to change or influence this control or algorithm is easier to manage for the operator in a central place. For example, if, for a given set of services, the iRAT restrictions and/or preferences to be applied happen to change, the operator can easily modify the rules in the MME for the whole pool area, instead of modifying the rules in all the hundreds or possibly even thousands of cNBs from different vendors in this pool area.

In the previous approach developed for UMTS, each RAN node from a different vendor may potentially apply a different algorithm to decide overall whether or not to carry out iRAT handover based on all the per-service handover indications which have been received per bearer from the CN nodes. This can typically result in non-homogeneous decisions taken throughout the whole RAN access network resulting in potential traffic imbalances or ping pong in the network. By employing a method in accordance with the invention, it may enable a homogenous iRAT handover policy throughout the whole access network if the eNBs follow the MME aggregate indication. Thus, if an operator wants to modify the iRAT handover policy per services, this modification need only be carried out at the central MME location and it will take effect in the whole pool area. This is easier compared to modifying the rules in each and every eNB, with no guarantee of result since each eNB of different vendors could run a different algorithm behind the new rules.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method for providing a handover indication in a cellular wireless network, comprising: receiving at a core network node all on-going and/or requested bearer service requests for a user equipment, UE, at a certain time;
**characterized by**
the core network node using information from said on-going and/or requested bearer service requests to determine what inter-RAT, Radio Access Technology, restrictions and/or preferences apply to said UE to provide an aggregate indication for handover; communicating the aggregate indication to an access node which is serving the UE.

2. The method as claimed in claim 1 and wherein the core network node makes a determination to provide an aggregate indication when a configuration change is requested applicable to said UE.

3. The method as claimed in claim 1 or 2 and wherein the core network node is a Mobile Management Entity, MME.

4. The method as claimed in claim 1, 2 or 3 and wherein the core network node is included in a network implemented in accordance with LTE standards.

5. The method as claimed in claim 4 and wherein the access node is an eNodeB, eNB.

6. The method as claimed in any preceding claim and including using subscription based information to make the determination.

7. A core network node comprising: a receiver for receiving all on-going and/or requested bearer service requests for a user equipment, UE, at a certain time;
**characterized by**
a processor for using information from said on-going and/or requested bearer service requests to determine what inter-RAT, Radio Access Technolo , restrictions and/or preferences apply to said UE to provide an aggregate indication for handover; and a communicator for communicating the aggregate indication to an access node which is serving the UE.

8. The core network node as claimed in claim 7 and wherein the node is an MME in an LTE network.

9. A cellular wireless network arranged to implement a method as claimed in any of claims 1 to 6.

10. A cellular wireless network comprising a core network node as claimed in claim 7 or 8.

## Patentansprüche

1. Verfahren zur Bereitstellung einer Handover-Angabe in einem drahtlosen Netzwerk, umfassend: Empfangen, an einem Kernnetzwerkknoten, aller gegenwärtigen und/oder angeforderten Trägerdienst-Anfragen für ein Benutzergerät, UE, zu einem bestimmten Zeitpunkt,
**gekennzeichnet durch**
Verwenden, **durch** den Kernnetzwerkknoten, von Informationen aus den besagten gegenwärtigen und/oder angeforderten Trägerdienst-Anfragen, um zu ermitteln, welche Inter-RAT- bzw. Funkzugangstechnologie-Beschränkungen und/oder-Präferenzen auf das besagte UE anwendbar sind, um eine aggregierte Angabe für den Handover bereitzustellen;
Übermitteln der aggregierten Angabe an einen Zugangsknoten, welcher das UE bedient.

2. Verfahren nach Anspruch 1, und wobei der Kernnetzwerkknoten eine Bestimmung für die Bereitstellung einer aggregierten Angabe vornimmt, wenn eine auf das besagte UE anzuwendende Konfigurationsänderung angefordert wird.

3. Verfahren nach Anspruch 1 oder 2, und wobei der Kernnetzwerkknoten eine Mobilitätsverwaltungsentität, MME, ist.

4. Verfahren nach Anspruch 1, 2 oder 3, und wobei der Kernnetzwerkknoten in einem gemäß den LTE-Standards implementierten Netzwerk umfasst ist.

5. Verfahren nach Anspruch 4, und wobei der Zugangsknoten ein eNodeB, eNB, ist.

6. Verfahren nach einem beliebigen der vorstehenden Ansprüche, und umfassend das Verwenden von auf einem Abonnement beruhenden Informationen, um die Bestimmung vorzunehmen.

7. Kernnetzwerkknoten, umfassend: einen Empfänger für den Empfang aller gegenwärtigen und/oder angeforderten Trägerdienst-Anfragen für ein Benutzerendgerät, UE, zu einem bestimmten Zeitpunkt;
**gekennzeichnet durch**
einen Prozessor für die Verwendung der Informationen aus den besagten gegenwärtigen und/oder angeforderten Trägerdienst-Anfragen, um zu ermitteln, welche Inter-RAT- bzw. Funkzugangstechnologie-Beschränkungen und/oder -Präferenzen auf das besagte UE anwendbar sind, um eine aggregierte Angabe für den Handover bereitzustellen; und
eine Kommunikationsvorrichtung zum Übermitteln der aggregierten Angabe an einen Zugangsknoten, welcher das UE bedient.

8. Kernnetzwerkknoten nach Anspruch 7, und wobei der Knoten eine MME in einem LTE-Netzwerk ist.

9. Zellulares drahtloses Netzwerk, dazu ausgelegt, ein Verfahren nach einem beliebigen der Ansprüche 1 bis 6 zu implementieren.

10. Zellulares drahtloses Netzwerk, umfassend einen Kernnetzwerkknoten gemäß Anspruch 7 oder Anspruch 8.

## Revendications

1. Procédé pour fournir une indication de transfert dans un réseau sans fil cellulaire, comprenant l'étape suivante : recevoir au niveau d'un noeud de réseau central toutes les demandes de services de support en cours et/ou demandés pour un équipement utilisateur, UE, à un moment donné ;
**caractérisé en ce que**
le noeud de réseau central utilise des informations à partir desdites demandes de services de support en cours et/ou demandés pour déterminer quelles restrictions et/ou préférences inter-RAT, technologie d'accès radio, s'appliquent audit UE pour fournir une indication agrégée pour le transfert ; et communique l'indication agrégée à un noeud d'accès qui dessert l'UE.

2. Procédé selon la revendication 1 et dans lequel le noeud de réseau central effectue une détermination pour fournir une indication agrégée applicable audit UE lorsqu'un changement de configuration est demandé.

3. Procédé selon la revendication 1 ou 2 et dans lequel le noeud de réseau central est une entité de gestion de mobilité, MME.

4. Procédé selon la revendication 1, 2 ou 3 et dans lequel le noeud de réseau central est inclus dans un réseau mis en oeuvre conformément aux normes LTE.

5. Procédé selon la revendication 4 et dans lequel le noeud d'accès est un eNodeB, eNB.

6. Procédé selon l'une quelconque des revendications précédentes et comprenant l'utilisation d'informations basées sur l'abonnement pour effectuer la détermination.

7. Noeud de réseau central comprenant : un récepteur pour recevoir toutes les demandes de services de support en cours et/ou demandés pour un équipement utilisateur, UE, à un moment donné ;
**caractérisé par**
un processeur pour utiliser des informations à partir desdites demandes de services de support en cours et/ou demandés pour déterminer quelles restrictions et/ou préférences inter-RAT, technologie d'accès radio, s'appliquent audit UE pour fournir une indication agrégée pour le transfert ; et un communicateur pour communiquer l'indication agrégée à un noeud d'accès qui dessert l'UE.

8. Noeud de réseau central selon la revendication 7 et dans lequel le noeud est une MME dans un réseau LTE.

9. Réseau sans fil cellulaire agencé pour mettre en oeuvre un procédé selon l'une quelconque des revendications 1 à 6.

10. Réseau sans fil cellulaire comprenant un noeud de réseau central selon la revendication 7 ou 8.
